# EUROPÄISCHE PATENTSCHRIFT

(11) **EP 0 697 504 B1**
(45) Veröffentlichungstag und Bekanntmachung des Hinweises auf die Patenterteilung: **25.02.1998**
(21) Anmeldenummer: 95111160.8
(22) Anmeldetag: 17.07.1995
(51) Int. Cl.: F01L 1/348

(54) **Vorrichtung zum Spannen und Verstellen eines als Kette ausgebildeten Umschlingungstriebes**
Device for tensioning and adjusting a chain drive
Dispositif pour tendre et régler un entraînement par chaine

(30) Priorität: 17.08.1994 DE 4429071
(43) Veröffentlichungstag der Anmeldung: 21.02.1996
(73) Patentinhaber: Dr.Ing.h.c. F. Porsche Aktiengesellschaft, 70435 Stuttgart (DE); HYDRAULIK-RING ANTRIEBS- UND STEUERUNGSTECHNIK GmbH, D-72622 Nürtingen (DE)
(72) Erfinder: Trzmiel, Alfred, D-72661 Grafenberg (DE); Stephan, Wolfgang, D-72622 Zizishausen (DE); Alber, Thomas, D-70771 Leinfelden-Echterdingen (DE); Fiedler, Olaf, D-75196 Remchingen (DE); Jaksch, Andreas, D-73734 Esslingen (DE)

(56) Entgegenhaltungen:
- EP-A- 0 445 356
- US-A- 5 201 289

## Beschreibung

Die Erfindung betrifft eine Vorrichtung nach dem Oberbegriff des Patentanspruchs 1.

Die US-PS 4 862 845 behandelt eine Vorrichtung zum Spannen und Verstelllen einer Kette. die zwischen zwei Nockenwellen einer Brennkraftmaschine wirksam ist, wobei durch Verstellen der Kette die relative Drehlage der beiden Nockenwellen zueinander geändert wird. Dieser Ausführung haftet zum einen der Nachteil an, daß der Verstellvorgang teils mit aufwendigen Getrieben erfolgt, die eine weitgehend verzögerungsfreie Änderung der relativen Nockenwellendrehlage erschwert. Außerdem sind für die Realisierung der dargestellten Ausführungsformen noch umfassende konstruktive und empirische Untersuchungen erforderlich, die einen beachtlichen Kostenautwand verursachen.

In der EP 0 445 356 Al (korrespondiert mit DE 40 06 910) wird eine Vorrichtung zum Spannen und Verstellen eines Nockenwellen-Kettentriebes offenbart, die mit konstruktiver Übersicht gestaltete Bauteile, insbesondere Hydraulikkolben umfaßt und bezüglich Funktion gute Ergebnisse erzielt.

Die DE-Z. ATZ Automobiltechnische Zeitschrift 93 (1991), Heft 10 und MTZ Motortechnische Zeitschrift 52 (1991), Heft 12 beschreibt eine Nockenwellenverstellung mit den Merkmalen der oben genannten EP 0 445 356. Danach werden bei konstanter Positionierung der Auslaßnockenwelle zwei Stellungen der Einlaßnockenwelle realisiert:
■ Leistungsstellung (= Grundstellung); spätes Einlaßmittel EM = 120 ° , KW geringe Ventilüberschneidung;
■ Drehmomentstellung; frühes Einlaßmittel EM = 105 °, KW größere Ventilüberschneidung.

Die Ergebnisse dieser realisierten Vorrichtung zur Nockenwellenverstellung bezüglich Leistung, Drehmoment, Abgasemission und letztlich auch Kraftstoffverbrauch unterstreichen ihre richtungsweisende Konstruktion.

Aufgabe der Erfindung ist es, diese Vorrichtung unter Beibehaltung ihrer Grundkonzeption weiter zu verbessern.

Erfindungsgemäß wird diese Aufgabe durch die kennzeichnenden Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, daß durch die Stelleinrichtung zusätzlich zur Spätstellung - Grundsteuerzeit - und Frühstellung Drehmomentstellung - eine mittlere Zwischenstellung schaltbar ist.

Mit diesen drei Stellungen läßt sich eine relativ große Bandbreite von variablen Ventilsteuerzeiten mit vorhandenem Motor - Öldruck verwirklichen, die einer stufenlosen oder proportionalen Verstellung ähnlich ist, jedoch ohne den dafür erforderlichen baulichen Aufwand; er ist in der Sensorik für die Istwerterfassung der Nockenwelle, einem elektromagnetischen Stetigventil und der Festhaltung des Verstellerkolbens in einer definierten Stellung zu sehen. Für herkömmliche Systeme - Axialversteller - werden zusätzliche kostenaufwendige Hochleistungs-Ölpumpen (> 20 bar) benötigt.

Die Stelleinrichtung umfaßt einen weiteren Hydraulikkolben, der sich mit vertretbaren Mitteln in das Hydrauliksystem, umfassend zwei Hydraulikkolben, teleologisch integrieren läßt. Der jeweilige Endanschlag für den dritten Hydraulikkolben kann in das vorhandene Hydrauliksystem auf einfache Weise integriert werden. Schließlich erfolgt die Ansteuerung des Hydraulikkolbens mittels eines 5/3-Wege-Ventils, das eine gute sowie sichere Funktion gewährleistet und sich zusammen mit einem es betätigenden Hubmagneten auf einfache Weise in das Gehäuse der Hydraulikkolben integrieren läßt.

In der Zeichnung sind Ausführungsbeispiele der Erfindung dargestellt, die nachstehend näher beschrieben sind.

Es zeigt
- Fig. 1: einen Teilquerschnitt eines Zyllinderkopfes mit der erfindungsgemäßen Vorrichtung - Vorrichtung in Spätstellung -
- Fig. 2: eine Ansicht entsprechend Fig. 1 - Vorrichtung in Mittelstellung - ;
- Fig. 3: eine Ansicht entsprechend Fig. 1 - Vorrichtung in Frühstellung - ;
- Fig. 4: eine Ansicht entsprechend Fig. 1 mit einer weiteren Ausführungsform;
- Fig. 5: eine Ansicht entsprechend Fig. 1 mit einer weiteren Ausführungsform.

Eine nicht näher dargestellte Brennkraftmaschine treibt mittels einer Kurbelwelle eine Auslaßnockenwelle 1 an, wobei hierfür ein erster Umschlingungstrieb - Kette, Riemen - vorgesehen ist. Prinzipiell ist dies in der EP 0 445 356, die auch als Stand der Technik hier gewürdigt ist, dargestellt.

Parallel zur Auslaßnockenwelle 1 erstreckt sich eine Einlaßnockenwelle 2, die von der Auslaßnockenwelle 1 mittels einer Kette 3 angetrieben wird. Die Auslaßnockenwelle 1 und die Einlaßnockenwelle 2 betätigen pro Zylinder zwei Auslaßventile bzw. zwei Einlaßventile, was nicht dargestellt ist. Beide Nockenwellen sind oberhalb eines Zylinderkopfes angeordnet und mit Kettenrädern 4 versehen, die von der Kette 3 umschlungen sind.

Die Steuerzeiten der Einlaßventile sind zur Leistungs- und Drehmoment-Optimierung variabel, wofür eine Vorrichtung 5 mit einer Verstellvorrichtung 5' vorgesehen ist. Die Vorrichtung 5 dient zum Spannen der Kette 3 und Verstellen der Einlaßnockenwelle 2 relativ zur Auslaßnockenwelle 1, deren Stellung zur Kurbelwelle über den Umschlingungstrieb formschlüßsig festgelegt ist. Außerdem ist die Vorrichtung 5 zwischen Lasttrum 6 und Lostrum 7 der Kette 3 angeordnet, wobei auf die Innenseiten 8, 9 des Lostrums 7 und des Lasttrums 6 Gleitschuhe 10, 11 wirken, die aus Kunststoff bestehen und auf den dem Lasttrum 6 und dem Lostrum 7 zugekehrten Seiten einen radiusähnlichen Verlauf aufweisen. Die Gleitschuhe 10, 11 haben eine kreisabschnittartige Grundform und sind mit benachbarten plattenförmigen Trägern 12, 13 z.B. formschlüssig verbunden, d.h. die Träger 12 , 13 werden von den Gleitschuhen 10, 11 derart umgriffen, daß letztere durch Einschieben mit den Trägern 12, 13 zu verbinden sind.

Der Träger 12 ist mit einem ersten hohlen äußeren Hydraulikkolben 14 fest verbunden; der Träger 13 mit einem zweiten inneren, ebenfalls hohlen Hydraulikkolben 15, der im ersten Hydraulikkolben 14 geführt ist. In einem Hohlraum 16 zwischen dem ersten Hydraulikkolben 14 und dem zweiten Hydraulikkolben 15 ist eine vorgespannte spiralformartige Druckfeder 17 vorgesehen.

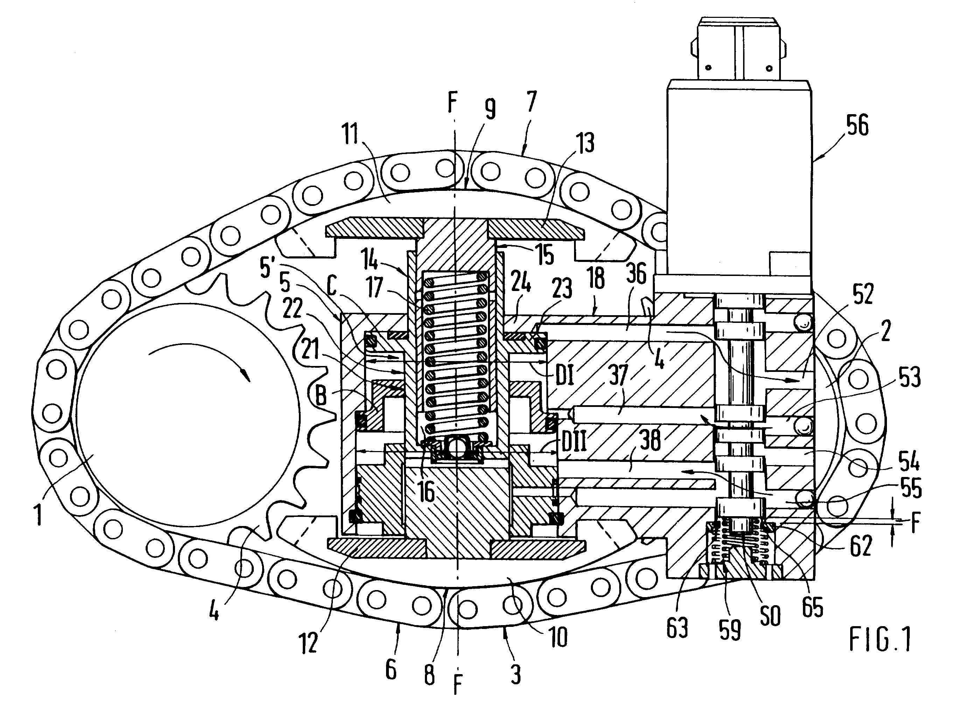

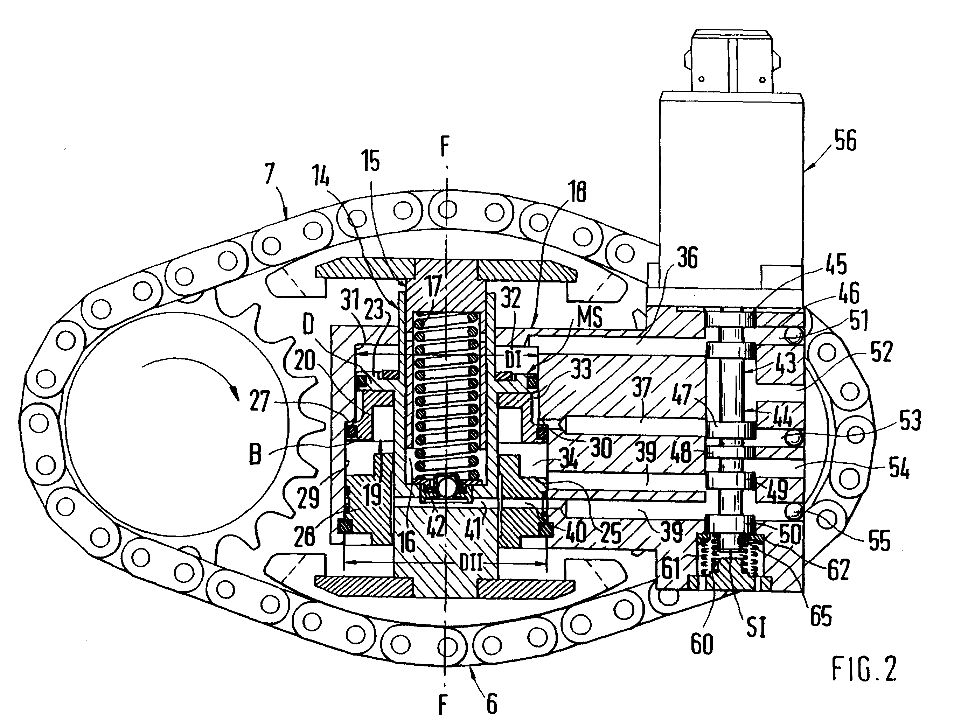

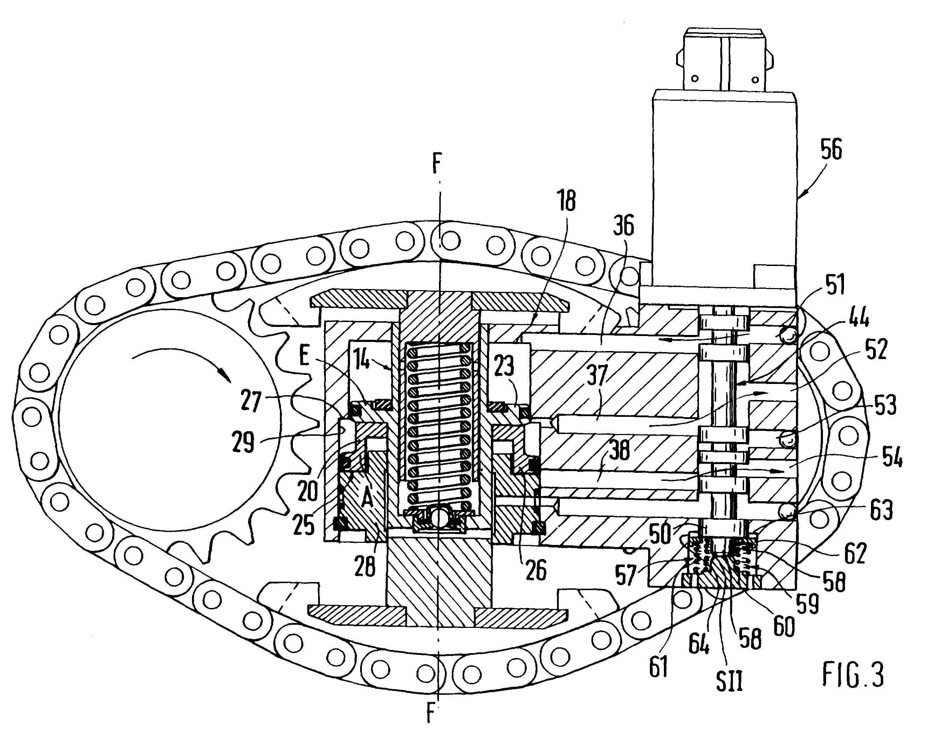

Der erste Hydraulikkolben 14 und der zweite Hydraulikkolben 15 sind in ein Gehäuse 18 eingebaut, in dem auch eine Stelleinrichtung 19 angeordnet ist - Fig. 2 - , durch die der erste Hydraulikkolben 14 in einer Mittelstellung MS , die auch eine nicht exakt mittige Stellung sein kann, festlegbar ist. Die Stelleinrichtung 19 wird durch einen dritten Hydraulikkolben 20 gebildet, der von Grundstellung A - Fig. 3 - in Arbeitsstellung B - Fig. 1 und 2 - bewegbar ist und mit einer Bohrung 21 einen Führungsschaft 22 des ersten Hydraulikkolbens 14 umgibt.

Der erste Hydraulikkolben 14 umfaßt einen zylindrischen Kolbenbund 23 und ist innerhalb der Stellungen C, D und E verstellbar. Dabei ist:
- Stellung C = Spätstellung (auch Grundstellung); Einlaßventile öffnen spät - Fig. 1 -
- Stellung E = Drehmomentstellung; Einlaßventile öffnen früh - Fig. 3 -
- Stellung D = Mittelstellung; optimierte Drehmomentstellung zwischen Spätstellung und Frühstellung - Fig. 2 -

In Stellung C liegt der Kolbenbund 23 des ersten Hydraulikkolbens 14 an einer dem Lostrum 7 benachbarten Wand 24 des Gehäuses 18 an. Dagegen stützt sich der Kolbenbund 23 in Stellung D an einem Kolbenboden des dritten Hydraulikkolbens 20 ab (Betriebsstellung B). Gleiche Abstützverhältnisse ergeben sich zwar in der Stellung E, jedoch der dritte Hydraulikkolben 20 ist in der Grundstellung A festgelegt.

Der dritte Hydraulikkolben 20 ist in der Grundstellung A von einem ersten Anschlag 25 begrenzt, d.h. ein Kragen 26 dieses Hydraulikkolbens wirkt mit ihm zusammen. Dagegen liegt in der Arbeitsstellung B der Kragen 26 an einem zweiten Anschlag 27 an. Dabei ist der erste Anschlag 25 an einem Schließteil 28 einer ersten Bohrung 29 des Gehäuses 18 vorgesehen, die zur Führung des dritten Hydraulikkolbens 20 bzw. seines Kragens 26 dient; der zweite Anschlag 27 ist ein Vorsprung 30 der ersten Bonrung 29. Nach dem Vorsprung 30 erstreckt sich eine zweite Bohrung 31, die koaxial zur ersten Bohrung 29 verläuft, wobei ihr Durchmesser D I kleiner ist als der Durchmesser D II der ersten Bohrung 29. In der zweiten Bohrung 31 ist der Kolbenbund 23 des ersten Hydraulikkolbens 14 geführt.

Der erste Hydraulikkolben 14 ist von Druckräumen 32, 33 aus wechselweise mit Hydraulikdruck beaufschlagbar; der dritte Hydraulikkolben 20 vom Druckraum 33 und einem Druckraum 34 aus.

Die Druckräume 32, 33, 34 sind an gebohrte Arbeitsleitungen - AL - 36, 37, 38 im Gehäuse 18 angeschlossen, die im rechten Winkel zu einer Mittellängsebene F - F der Vorrichtung 5 bzw. der Hydraulikkolben 14, 15, 20 verlaufen - Fig. 2- . Eine weitere Arbeitsleitung 39 ist über eine Verbindungsleitung 40 im Schließteil 28 an einen Druckraum 41 angeschlossen, von dem aus unter Überwindung eines Kugelventils 42 der Hohlraum 16 zwischen den Hydraulikkolben 14, 15 während des Betriebs der Brennkraftmaschine ständig mit Hydraulikdruck beaufschlagt wird. Dieser Hydraulikdruck und die Druckfeder 17 sichern eine definierte Spannung der Kette und zwar in Richtung Lasttrum 6 und Lostrum 7.

Zur Ansteuerung des ersten Hydraulikkolbens 14 und des dritten Hydraulikkolbens 20 dient ein den Brennkraftmaschinen Öldruck nutzendes (eine zusätzliche Ölpumpe entfällt) 5/3-Wege-Ventil 43 - 5 Anschlüsse, 3 Schaltstellungen - - Fig. 2 - , das eine Kolbenstange 44 mit mehreren beabstandeten Kolben 45, 46 , 47, 48 , 49, 50 aufweist, wobei die Kolben 45, 48, 50 Führungsfunktion und die Kolben 46, 47, 49 Steuerfunktion aufweisen. Die Kolben 46, 47 und 49 wirken in Abhängigkeit der axialen Stellung der Kolbenstange 43 mit den Arbeitsleitungen 36, 37, 38 zusammen. Außerdem weist das 5/3-Wege-Ventil 43 parallel zu den Arbeitsleitungen - AL - 36, 37, 38 Systemleitungen - SL - 51, 52, 53, 54, 55 auf. Über SL 51, 53 und 55 wird Hydraulikdruck eingespeist; SL 52, 54 dienen dem Hydraulik-Rücklauf.

Das 5/3-Wege-Ventil 43 ist in das Gehäuse 18 integriert und mit einem elektrisch betätigtem Hubmagnet 56 versehen. Der Hubmagnet 56 ist koaxial zur Kolbenstange 44 angeordnet, wobei ein freies Ende 57 der Kolbenstange 44 mit einem Zapfen 58 und dem Kolben 50 auf eine Registerfederanordnung 59 ausgerichtet ist - Fig. 3 - .

Die Registerfederanordnung 59 umfaßt eine erste Druckfeder 60 und eine zweite Druckfeder 61, die unterschiedliche Durchmesser aufweisen und abschnittsweise ineinandergesetzt sind. Dabei stützt sich die erste Druckfeder 60, die auf der der Kolbenstange 44 abgekehrten Seite einen Zapfen umgibt, am Kolben 50 ständig ab. Die zweite Druckfeder 61 liegt an einer Scheibe 62 an, die gegen einen Vorsprung 63 in einer Bohrung 64 gespannt ist und bei unbestromtem Hubmagneten 56 - Fig. 1 - einen axialen Abstand F zu einer Anschlagfläche 65 des Kolbens 50 aufweist - Steuerstellung S 0 -. Wird der Hubmagnet 56 teilbestromt (1 Ampere) liegt die Anschlagfläche 65 an der Scheibe 62 an und die Kolbenstange 44 nimmt die Steuerstellung S I ein - Fig. 2 - . Sobald der Hubmagent 56 voll bestromt (2 Ampere) wird, überdrückt der Kolben 50 die Scheibe 62 und die Kolbenstange 44 befindet sich in der Steuerstellung S II; der max. Hub des Hubmagneten ca. 2,1 mm ist eingestellt.

Bei den Stellungen C, D und E ergeben sich folgende Ölwege:
- Stellung C; SL 53 und 55 in Richtung AL 37 und 38 sowie AL 36 in Richtung SL 52; - Fig. 1 - ;
- Stellung D; SL 51 in Richtung AL 36 sowie AL 37 und 38 in Richtung SL 52 und 54; - Fig. 3 - ;
- Stellung E; SL 51 und 55 in Richtung AL 36 und 38 sowie AL 37 in Richtung SL 52; - Fig. 2 -.

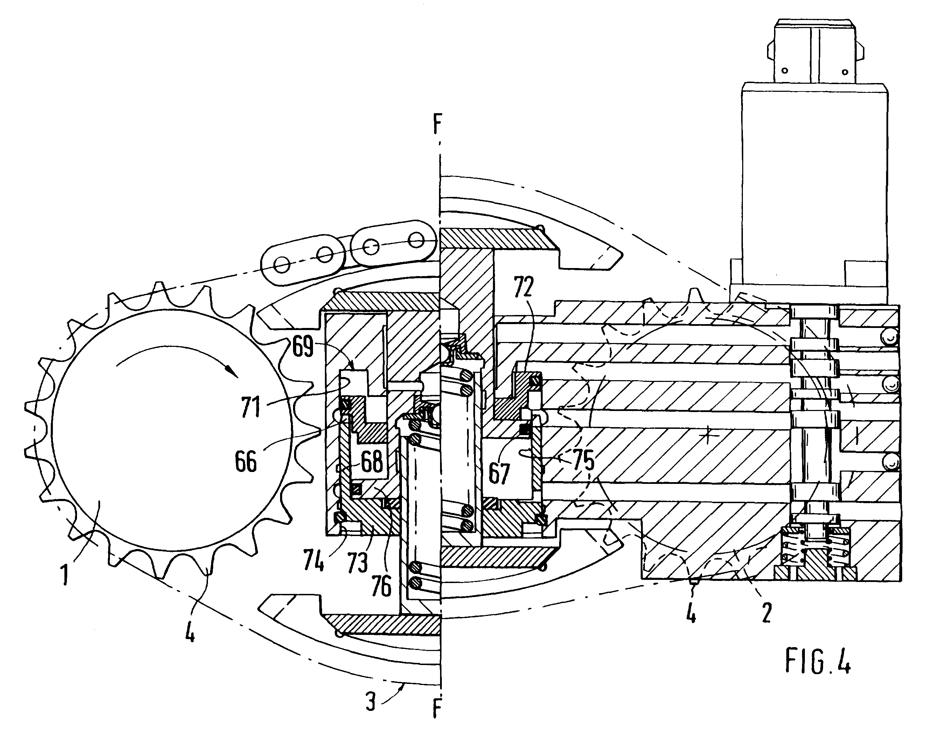

Gemäß Fig. 4 ist ein zweiter Anschlag 66 ein freies Ende 67 eines Kolbenschaftes 68, wogegen der erste Anschlag 69 eine Begrenzungsfläche 70 einer Bohrung 71 eines dritten Hydraulikkolbens 72 ist. Der Kolbenschaft 68 ist an einem tassenartigen Kolben 73 vorgesehen, der ein festgesetztes Schließteil, nämlich in einer Bohrung 74 des dritten Hydraulikkolbens 72 ist. Dabei ist eine Innenseite 75 des Kolbenschaftes 68 als Führungsbohrung für einen ersten Hydraulikkolben 76 ausgebildet.

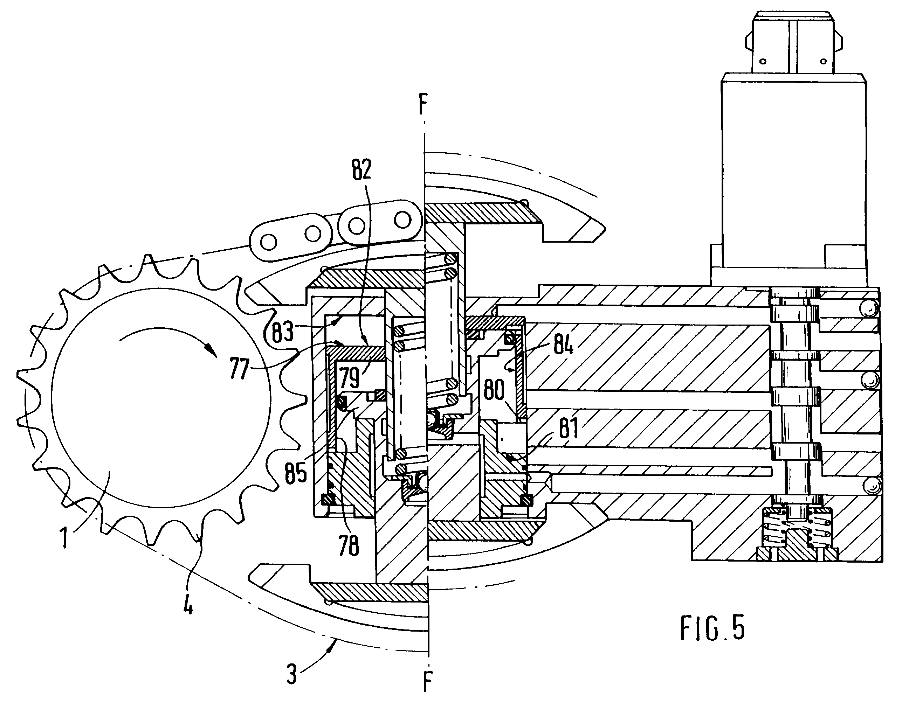

In Fig. 5 weist ein dritter Hydraulikkolben 77 einen Kolbenschaft 78 und einen Kolbenboden 79 auf. Ein freies Ende 80 des Kolbenschaftes 78 wirkt je nach Stellung des Hydraulikkolbens 77 mit einem zweiten Anschlag 81 und einer Außenseite 82 des Kolbenbodens 79 mit einem ersten Anschlag 83 zusammen. Dabei ist eine Innenseite 84 des Kolbenschaftes 78 als Führungsbohrung für einen ersten Hydraulikkolben 85 ausgeführt.

### Funktionsbeschreibung

Beim Betrieb der Brennkraftmaschine im kalten Zustand (< 40° Grad) arbeitet die Vorrichtung 5 lediglich als Spanner. Wird diese Temperatur überschritten ergeben sich in Abhängigkeit von Betriebsparametern folgende Stellungen der Vorrichtung 5:
1. Zwischen Leerlauf und 1500/min Stellung C = Spätstellung; Hubmagnet 52 weist Stellung S 0 auf - Fig. 1-.
2. Nach 1500/min bis 4500/min Stellung D = Frühstellung; Hubmagnet 52 weist Steuerstellung S II auf - Fig. 3 -.
3. Nach 4500/min bis 6000/min Mittelstellung; Hubmagnet 52 weist Steuerstellung SI auf -Fig. 2-.
4. Oberhalb 6000/min Spätstellung; Hubmagnet weist Steuerstellung S 0 auf - Fig. 1 - .

Vorstehende Drehzahlangaben sind Beispielwerte, die je nach Art der Brennkraftmaschine für die spezifischen Belange in mehr oder weniger ausgeprägter Form variierbar sind, wobei zusätzliche Parameter wie Last (Gaspedalstellung), Öltemperatur oder dgl. berücksichtigt werden können. Sämtlich Parameter werden einem Motorsteuergerät - Rechner - zugeführt, der entsprechende Steuergrößen an den Hubmagneten 52 weitergibt.

Bei den Verstellvorgängen werden die Hydraulikkolben 14, 15 und 20 derart quer zu den Innenseiten 8 und 9 zur Kette 3 verschoben, daß das Lostrum 7 der Kette verlängert und das Lasttrum 6 verkürzt bzw. das Lostrum 6 verkürzt und das Lasttrum 7 verlängert wird. Dabei bleibt die Auslaßnockenwelle 1 zur Kurbelwelle lagekonstant, weil in treibender Verbindung, wogegen die Einlaßnockenwelle 2 verdreht wird; die Ventilsteuerzeiten ändern sich.

## Patentansprüche

1. Vorrichtung (5) zum Spannen und Verstellen eines als Kette (3)ausgebildeten Umschlingungstriebs, mit dem eine Nockenwelle einer Brennkraftmaschine eine zweite Nockenwelle (Einlaßnockenwelle 2) antreibt, wobei durch Verstellen der Kette (3) mit einer quer zur Kette (3) wirkenden Verstellvorrichtung (5') die relative Drehlage der Nockenwellen (1, 2) zueinander geändert wird, welche Verstellvorrichtung (5') zum Verstellen der Kette (3) quer zur letzteren verschoben wird, dergestalt, daß das Lostrum (7) der Kette verlängert und das Lasttrum (6) verkürzt oder das Lostrum (7) verkürzt und das Lasttrum (6) verlängert wird und darüber hinaus die Verstellvorrichtung (5') hydraulisch betätigt ist, welche Verstellvorrichtung (5') aus einem ersten hohlen äußeren Hydraulikkolben (15) einem zweiten in ihm geführten inneren, ebenfalls hohlen Hydraulikkolben (15) und einer in den Hohlraum (16) zwischen den beiden Hydraulikkolben (14, 15) verspannten Druckfeder (17) besteht, wobei zusätzlich zur Kraft der Druckfeder (17) die Hydraulikkolben (14, 15) über einen Hohlraum (16) zwischen den beiden Hydraulikkolben (14, 15) mit Hydraulikdruck permanent beaufschlagt sind, welcher erste Hydraulikkolben (14) über Druckräume (32. 33) wechselweise mit Hydraulikdruck beaufschlagbar ist, wobei die Hydraulikkolben (14, 15) in einem Gehäuse (18) gelagert sind, dadurch gekennzeichnet, daß der erste Hydraulikkolben (14) von einem dritten Hydraulikkolben (20) umgeben ist, der wechselweise mit Hydraulikdruck beaufschlagbar ist, dergestalt, daß der dritte Hydraulikkolben (20) zwischen einer Grundstellung (A) und einer den ersten Hydraulikkolben (14) in einer Mittelstellung (MS) festlegenden Arbeitsstellung (B) bewegbar ist.

2. Vorrichtung nach Anspruch 1, dadurch gekennzeichnet, daß der dritte Hydraulikkolben (20) in der Grundstellung (A) von einem ersten Anschlag (25) und in der Arbeitsstellung (B) von einem zweiten Anschlag (27) festgelegt ist.

3. Vorrichtung nach Anspruch 2, dadurch gekennzeichnet, daß der erste Anschlag (25) an einem Schließteil (28) einer ersten Bohrung (29) des Gehäuses (18) für den dritten Hydraulikkolben (20) vorgesehen ist, wogegen der zweite Anschlag (27) einen Vorsprung (30) in der Bohrung ist.

4. Vorrichtung nach einem oder mehreren der vorangehenden Ansprüche, dadurch gekennzeichnet, daß koaxial zur ersten Bohrung (29) eine zweite Bohrung (31) für den ersten Kolben (14) vorgesehen ist, dessen Durchmesser (D I) geringfügig kleiner ist als der Durchmesser (D II) der ersten Bohrung (29).

5. Vorrichtung nach den Ansprüchen 1 und 2, dadurch gekennzeichnet, daß der zweite Anschlag (66) durch ein freies Ende (67) eines Kolbenschaftes (68) gebildet wird, wogegen der erste Anschlag (69) eine Begrenzungsfläche (70) einer Bohrung (71) für den dritten Hydraulikkolben (72) ist.

6. Vorrichtung nach Anspruch 5, dadurch gekennzeichnet, daß ein tassenartiger Kolben (73) des Kolbenschaftes (68) als festgesetztes Schließteil der Bohrung (74) des dritten Hydraulikkolbens (72) dargestellt ist.

7. Vorrichtung nach Anspruch 6, dadurch gekennzeichnet, daß die Innenseite (75) des Kolbenschaftes (68) als Führungsbohrung für den ersten Hydraulikkolben (76) ausgebildet ist.

8. Vorrichtung nach den Ansprüchen 1 und 2 dadurch gekennzeichnet, daß der dritte Hydraulikkolben (77) einen Kolbenschaft (78) und einen Kolbenboden (79) aufweist, wobei ein freies Ende (80) des Kolbenschaftes (78) mit dem zweiten Anschlag (81) und die Außenseite (82) des Kolbenbodens (79) mit dem ersten Anschlag (83) zusammenwirkt.

9. Vorrichtung nach Anspruch 8, dadurch gekennzeichnet, daß die Innenseite (84) des Kolbenschaftes (78) als Führungsbohrung für den ersten Hydraulikkolben (85) ausgebildet ist.

10. Vorrichtung nach einem oder mehreren der vorangehenden Ansprüche, dadurch gekennzeichnet, daß die Ansteuerung der Hydraulikkolben (14, 15, 20) mittels eines 5/3-Wege-Ventils (43) erfolgt.

11. Vorrichtung nach Anspruch 10, dadurch gekennzeichnet, daß das 5/3-Wege-Ventil (43) in das Gehäuse (18) integriert ist.

12. Vorrichtung nach Anspruch 11, dadurch gekennzeichnet, daß das 5/3-Wege-Ventil (43) baulich mit einem Hubmagneten (56) vereinigt ist, wobei eine Kolbenstange (44) des 5/3-Wege-Ventils (43) sich koaxial zum Hubmagneten (56) erstreckt.

13. Vorrichtung nach einem oder mehreren der vorangehenden Ansprüche, dadurch gekennzeichnet, daß die Kolbenstange (44) sich mit einem Kolben (50) in unbestromtem Zustand des Hubmagneten (56) auf einer ersten Druckfeder (60) abstützt, wogegen der Kolben (50) sich in teilbestromtem Zustand des Hubmagneten (56) für die Mittelstellung (MS) des ersten Hydraulikkolbens (14) an einer zweiten Druckfeder (61) abstützt.

## Claims

1. A device (5) for tensioning and adjusting a circulating drive constructed in the form of a chain (3), by which a camshaft of an internal-combustion engine drives a second camshaft (intake camshaft 2), wherein the relative rotational position of the camshafts (1, 2) with respect to each other is varied by adjusting the chain (3) by means of an adjustment device (5') acting transversely to the chain (3) and displaced transversely to the chain (3) in order to adjust the said chain (3), in such a way that the loose run (7) of the chain is lengthened and, in addition, the adjustment device (5') is actuated hydraulically, the said adjustment device (5') comprising a first hollow external hydraulic piston (14), a second likewise hollow internal hydraulic piston (15) guided therein and a compression spring (17) stressed in the cavity (16) between the two hydraulic pistons (14, 15), wherein in addition to the force of the compression spring (17) the hydraulic pistons (14, 15) are continuously acted upon with hydraulic pressure by way of a cavity (16) between the two hydraulic pistons (14, 15), the first hydraulic piston (14) of which can be acted upon with hydraulic pressure alternately by way of pressure chambers (32, 33), wherein the hydraulic pistons (14, 15) are mounted in a housing (18), **characterized in that** the first hydraulic piston (14) is surrounded by a third hydraulic piston (20) which can be acted upon alternately with hydraulic pressure, in such a way that the third hydraulic piston (20) is movable between a normal position (**A**) and an operating position (**B**) fixing the first hydraulic piston (14) in a middle position (**MS**).

2. A device according to Claim 1, **characterized in that** the third hydraulic piston (20) is fixed in the normal position (**A**) by a first stop (25) and in the operating position (**B**) by a second stop (27).

3. A device according to Claim 2, **characterized in that** the first stop (25) is provided on a closure member (28) of a first bore (29) in the housing (18) for the third hydraulic piston (20), whereas the second stop (27) is a projection (30) in the bore.

4. A device according to one or more of the preceding Claims, **characterized in that** a second bore (31) for the first piston (14), the diameter (**D I**) of which is slightly smaller than the diameter (**D II**) of the first bore (29), is provided coaxially with the first bore (29).

5. A device according to Claims 1 and 2, **characterized in that** the second stop (66) is formed by a free end (67) of a piston skirt (68), whereas the first stop (69) is a boundary face (70) of a bore (71) for the third hydraulic piston (72).

6. A device according to Claim 5, **characterized in that** a cup-like piston (73) of the piston skirt (68) is formed as a fixed closure member of the bore (74) of the third hydraulic piston (72).

7. A device according to Claim 6, **characterized in that** the inside (75) of the piston skirt (68) is constructed as a guiding bore for the first hydraulic piston (76).

8. A device according to Claims 1 and 2, **characterized in that** the third hydraulic piston (77) has a piston skirt (78) and a piston head (79), wherein a free end (80) of the piston skirt (78) cooperates with the second stop (81) and the outside (82) of the piston head (79) cooperates with the first stop (83).

9. A device according to Claim 8, **characterized in that** the inside (84) of the piston skirt (78) is constructed as a guiding bore for the first hydraulic piston (85).

10. A device according to one or more of the preceding Claims, **characterized in that** the hydraulic pistons (14, 15, 20) are actuated by means of a 5/3-way valve (43).

11. A device according to Claim 10, **characterized in that** the 5/3-way valve (43) is integrated in the housing (18)

12. A device according to Claim 11, **characterized in that** the 5/3-way valve (43) is joined structurally to a lifting magnet (56), wherein a piston rod (44) of the 5/3-way valve (43) extends coaxially with the lifting magnet (56).

13. A device according to one or more of the preceding Claims, characterized in that in the switched-off state of the lifting magnet (56) the piston rod (44) is supported by a piston (50) on a first compression spring (60), whereas in the partly switched-on state of the lifting magnet (56) for the middle position (**MS**) of the first hydraulic piston (14) the piston (50) is supported on a second compression spring (61).

## Revendications

1. Dispositif (5) pour tendre et régler une transmission à enroulement réalisée sous forme de chaîne (3), avec laquelle un arbre à came d'un moteur à combustion interne entraîne un deuxième arbre à came (arbre à came d'admission 2), où, par un réglage de la chaîne (3), effectué à l'aide d'un dispositif de réglage (5') agissant transversalement par rapport à la chaîne (3), on modifie la position relative des arbres (1, 2) entre eux, le dispositif de réglage (5') étant déplacé transversalement par rapport à la chaîne (3) pour effectuer le réglage de cette dernière, de manière que le brin mou (7) de la chaîne soit allongé et que le brin sous charge (6) soit raccourci, ou bien que le brin mou (7) soit raccourci et que le brin sous charge (6) soit rallongé et, de plus, le dispositif de réglage (5') étant actionné hydrauliquement, le dispositif de réglage (5') étant constitué d'un premier piston hydraulique extérieur (15) creux, d'un deuxième piston hydraulique intérieur (15) également creux, guidé à l'intérieur du premier piston hydraulique, et d'un ressort de compression (17), contraint dans l'espace creux (16) entre les deux pistons hydrauliques (14, 15), où, en plus de la force apportée par le ressort de compression (17), les pistons hydrauliques (14, 15) sont sollicités de façon permanente avec une pression hydraulique, par l'intermédiaire d'un espace creux (16) existant entre les deux pistons hydrauliques (14, 15), le premier piston hydraulique (14) pouvant être sollicité alternativement en pression hydraulique par l'intermédiaire d'espaces à pression (32, 33), les pistons hydrauliques (14, 15) étant montés dans un carter (18), caractérisé en ce que le premier piston hydraulique (14) est entouré par un troisième piston hydraulique (20) qui peut être alimenté alternativement en pression hydraulique, de manière que le troisième piston hydraulique (20) soit déplaçable, entre une position de base (A) et une position de travail (B), fixant le premier piston hydraulique (14) dans une position médiane (MS).

2. Dispositif selon la revendication 1, caractérisé en ce que le deuxième piston hydraulique (20) est fixé, dans la position de base (A), par une première butée (25) et, dans la position de travail (B), par une deuxième butée (27).

3. Dispositif selon la revendication 2, caractérisé en ce que la première butée (25) est prévue sur une partie de fermeture (28) d'un premier perçage (29) du carter (18) destiné au troisième piston hydraulique (20) alors que, par contre, la deuxième butée (27) est une saillie (30) ménagée dans le perçage.

4. Dispositif selon l'une ou plusieurs des revendications précédentes, caractérisé en ce qu'un deuxième perçage (31) est prévu pour le premier piston (14), coaxialement par rapport au premier perçage (29), deuxième perçage dont le diamètre (D I) est légèrement inférieur au diamètre (D II) du premier perçage (29).

5. Dispositif selon les revendications 1 et 2, caractérisé en ce que la deuxième butée (66) est constituée par une extrémité libre (67) d'une tige de piston (68), alors que, par contre, la première butée (69) est une surface de délimitation (70) d'un perçage (71) destiné au troisième piston hydraulique (72).

6. Dispositif selon la revendication 5, caractérisé en ce qu'un piston (73), du genre d'une tasse, appartenant à la tige de piston (68), est représenté sous forme de partie de fermeture fixe du perçage (74) du troisième piston hydraulique (72).

7. Dispositif selon la revendication 6, caractérisé en ce que la face intérieure (75) de la tige de piston (68) est réalisée sous forme de perçage de guidage destiné au premier piston hydraulique (76).

8. Dispositif selon les revendications 1 et 2, caractérisé en ce que le troisième piston hydraulique (77) présente une tige (78) et un fond (79), une extrémité libre (80) de la tige de piston (78) coopérant avec la deuxième butée (81), et la face extérieure (82) du fond de piston (79) coopérant avec la première butée (83).

9. Dispositif selon la revendication 8, caractérisé en ce que la face intérieure (84) de la tige de piston (78) est réalisée sous la forme de perçage de guidage pour le premier piston hydraulique (85).

10. Dispositif selon l'une ou plusieurs des revendications précédentes, caractérisé en ce que la commande des pistons hydrauliques (14, 15, 20) s'effectue au moyen d'une soupape à cinq voies/trois positions (43).

11. Dispositif selon la revendication 10, caractérisé en ce que la soupape cinq voies/trois positions (43) est intégrée dans le carter (18).

12. Dispositif selon la revendication 11, caractérisé en ce que la soupape cinq voies/trois positions (43) est réunie, du point de vue de la construction, à un aimant moteur (56), une tige de piston (44) de la soupape à cinq voies/trois positions (43) s'étendant coaxialement par rapport à l'aimant moteur (56).

13. Dispositif selon l'une ou plusieurs des revendications précédentes, caractérisé en ce que la tige de piston (44) prend appui sur un premier ressort de compression (50), par un piston (50), à l'état sans courant de l'aimant moteur (56), alors que, par contre, le piston (50) prend appui sur un deuxième ressort de compression (61), en un état à courant partiel de l'aimant moteur (56), pour la position médiane (MS) du premier piston hydraulique (14).
